# FASCICULE DE BREVET EUROPEEN

(11) **EP 3 141 434 B1**
(45) Date de publication et mention de la délivrance du brevet: **26.12.2018**
(21) Numéro de dépôt: 16183609.3
(22) Date de dépôt: 10.08.2016
(51) Int. Cl.: B60R 19/12, B60R 19/34

(54) **ENSEMBLE D'ABSORPTION DE CHOCS POUR FACE AVANT OU ARRIERE D'UN VEHICULE**
STOSSFÄNGERANORDNUNG FÜR FRONT- ODER HECKSEITE EINES FAHRZEUGS
SHOCK-ABSORBING ASSEMBLY FOR FRONT OR REAR END OF A VEHICLE

(30) Priorité: 11.09.2015 FR 1558460
(43) Date de publication de la demande: 15.03.2017
(73) Titulaire: PSA Automobiles SA, 78300 Poissy (FR)
(72) Inventeur: PERU, Marc, 92290 Chatenay Malabry (FR)

(56) Documents cités:
- EP-A1- 2 915 703
- EP-A2- 1 036 715
- DE-A1-102006 041 095
- US-A1- 2015 054 306

## Description

L'invention concerne un ensemble d'absorption de chocs pour face avant ou arrière d'un véhicule, par exemple d'un véhicule automobile. L'invention concerne également un véhicule équipé d'un tel dispositif.

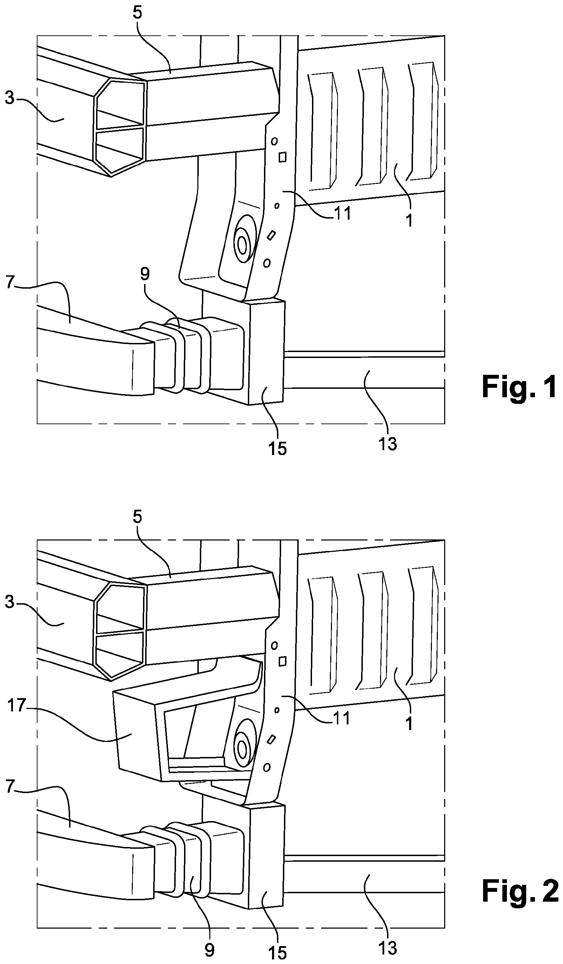

La figure 1 présente une vue partielle d'un ensemble d'absorption de chocs connu pour structure avant d'un véhicule automobile. L'ensemble comprend deux dispositifs d'absorption disposés étagés l'un au-dessus de l'autre. Chacun comprenant une poutre transversale reliée au niveau de ses extrémités à la structure du véhicule par des absorbeurs de chocs.

Le dispositif supérieur, dit « de voie haute », va absorber une partie de l'énergie de collision et diriger le reste de l'énergie à absorber vers les brancards 1 du véhicule. Chaque brancard 1 est généralement constitué d'une pièce en acier orientée selon l'axe longitudinal du véhicule et dont l'extrémité sert de support audit dispositif de sorte à ce que la poutre de pare-chocs 3 soit orientée transversalement. Des absorbeurs de chocs 5, également appelé « crash box », sont intercalés entre les extrémités des brancards 1 et la poutre de pare-chocs 3 afin de protéger la structure du brancard 1 en cas de choc à faible vitesse, et diriger les forces d'impact vers la structure du véhicule en cas de choc à plus haute vitesse. Les absorbeurs de chocs 5 sont des pièces déformables, typiquement en aluminium, associés à la poutre transversale de pare-chocs 3 au niveau de ses extrémités. Ils présentent généralement une partie profilée allongée dans le sens longitudinal qui se déforme par pliages successifs sous l'effet de l'effort de compression générée par le choc, selon un mode de déformation appelé « bottelage ». Un exemple de dispositif d'absorption supérieur connu est donné par le document FR2998842.

Des goussets de brancard 11 peuvent être intercalés entre les extrémités des brancards 1 et les absorbeurs supérieurs 5. Ces éléments de structure d'orientation verticale ont une fonction de support du dispositif de refroidissement du moteur, mais peuvent également servir d'éléments de liaison entre les dispositifs d'absorption inférieur et supérieur.

En effet, de manière optionnelle et comme représenté sur la figure 1, le véhicule peut également comprendre un dispositif d'absorption inférieur, dit « de voie basse », situé en dessous du dispositif d'absorption supérieur selon la direction verticale. Le dispositif inférieur d'absorption se présente, par exemple, sous forme d'une poutre transversale 7 reliée à la structure du véhicule par des éléments absorbeurs 9. Les éléments absorbeurs sont placés en prolongement d'éléments de structure longitudinaux dudit véhicule, ici des prolonges de berceau 13. Un élément de liaison, tel qu'une platine 15 absorbeur bas, contribue à relier les dispositifs d'absorption « voie haute » et « voie basse ».

Les dispositifs dits « de voie basse » peuvent se présenter sous d'autres formes comme décrit dans les documents FR3009255 et FR2987011. EP 2 915 703 décrit un ensemble d'absorption de chocs pour véhicule selon le préambule de la revendication 1.

Les règlementations actuelles obligent les constructeurs de véhicules automobiles à respecter certaines contraintes au niveau de la sécurité et à faire réaliser des tests afin d'obtenir l'homologation nécessaire à toute commercialisation. Ainsi, la face avant d'un véhicule doit satisfaire simultanément plusieurs protocoles de chocs frontaux, dont le protocole de choc frontal décalé à haute vitesse et le choc frontal à faible vitesse (ou « choc réparabilité »).

Dans le protocole de choc frontal décalé à haute vitesse, un véhicule est lancé à 64 km/h sur 40% de sa largeur contre une barrière déformable qui représente un véhicule roulant en sens inverse. L'accident ainsi simulé correspond à un accident entre deux voitures de même masse se déplaçant chacune à 50 km/h. Le comportement de la structure du véhicule est ainsi testé et notamment sa déformabilité et sa capacité à protéger les occupants du véhicule par exemple contre le risque d'intrusion d'éléments dans l'habitacle, par la redirection des forces d'impact et une déformabilité contrôlée.

La barrière normalisée pour ce test ou « barrière CEVE » représente la raideur et le comportement du véhicule adverse. La définition de cette barrière devrait évoluer prochainement afin de mieux prendre en compte le risque d'agressivité que peut présenter le véhicule testé. Un comportement du véhicule est qualifié d'agressif par exemple lorsqu'il génère un déchirement de la barrière.

Dans le protocole de « choc réparabilité », un véhicule est lancé à 16 km/h sur 40% de sa largeur contre un butoir. C'est le processus de déformation de la face avant du véhicule qui est ainsi testé. L'objectif est de promouvoir des processus de déformation qui minimisent les dégâts occasionnés par absorption de la totalité de l'énergie du choc. Ceci permet d'éviter que d'autres éléments du véhicule (tels que les têtes de brancard et le matériel de refroidissement) ne soient endommagés par le choc. Il devient alors possible de limiter les coûts de réparation du véhicule et de garder le véhicule roulant après le choc.

Lorsque l'on souhaite gagner en compacité et donc diminuer le porte-à-faux avant du véhicule, son comportement par rapport à un « choc réparabilité » peut être conservé en augmentant la raideur des absorbeurs (ou « crash-box »). Malheureusement, une telle augmentation de la raideur engendre un comportement plus agressif du véhicule lors d'un choc frontal décalé à haute vitesse.

Il serait avantageux de trouver une solution technique qui permette à la fois de gagner en compacité du véhicule sans pour autant lui donner un comportement agressif et tout en conservant un bon comportement de la face avant de ce véhicule tant en choc frontal décalé à haute vitesse qu'en « choc réparabilité ».

L'invention a pour objectif de répondre à au moins un des inconvénients rencontrés dans l'art antérieur en proposant un nouvel ensemble d'absorption de choc pour véhicule automobile qui permette de diminuer le porte-à-faux d'un véhicule tout en absorbant efficacement l'énergie d'un choc à faible vitesse et sans pour autant donner un comportement agressif au véhicule lors d'un choc à haute vitesse.

A cet effet, l'invention a pour objet un ensemble d'absorption de chocs pour véhicule selon la revendication 1.

Selon des modes particuliers de réalisation, l'invention peut comprendre l'une ou l'autre des caractéristiques suivantes, prises isolément ou selon toutes les combinaisons possibles :
- Le ou les goussets de brancard s'étendent verticalement.
- Au moins un absorbeur intermédiaire est disposé adjacent à un absorbeur supérieur.
- Au moins un absorbeur intermédiaire est disposé adjacent à chacun des absorbeurs supérieurs.
- Le véhicule comprend en outre des prolonges de berceau s'étendant longitudinalement sous les brancards, l'ensemble est remarquable en ce qu'au moins un absorbeur intermédiaire est destiné à être disposé ni dans le prolongement longitudinal d'un brancard ni dans le prolongement longitudinal d'une prolonge de berceau.
- L'absorbeur intermédiaire est dimensionné pour s'étendre longitudinalement sur une longueur inférieure ou égale à celle présentée par l'association d'un d'absorbeur supérieur et de la poutre supérieure. De préférence, l'absorbeur intermédiaire présente une longueur inférieure ou égale à celle présentée par un absorbeur supérieur.
- Au moins un élément d'absorption intermédiaire est constitué:
   - d'une boite en tôle pliée ou emboutie, ou
   - d'un bloc de mousse polyuréthane, ou
   - d'un matériau plastique thermoplastique ou thermodurcissable de préférence sélectionné dans le groupe comprenant les résines polypropylène, polyamide, polyphtalamide, polyetherethercétone, polysulfure de phénylène, polyamide-imide, polyetherimide, polyacrylamide, polyépoxyde, polyester insaturés, vinylester ou polyester-vinylester.
   - L'ensemble est destiné à être disposé sur la face avant d'un véhicule.

L'invention a également pour objet un véhicule automobile remarquable en ce qu'il comprend un ensemble tel que décrit ci-dessus selon toutes ses variantes.

Comme on l'aura compris à la lecture de la définition qui vient d'en être donnée, l'invention consiste selon un premier aspect à proposer de doter un ensemble d'absorption de chocs d'au moins un absorbeur supplémentaire dit « intermédiaire » destiné à être disposé au-dessus et/ou au-dessous d'un absorbeur supérieur de manière à répartir, lors d'un choc, l'effort de déformation sur une hauteur plus importante de la face avant ou arrière d'un véhicule. La présence d'un absorbeur intermédiaire va permettre de diminuer voire de supprimer le comportement agressif du véhicule lors d'un choc frontal décalé à haute vitesse en limitant la capacité de la poutre supérieure à pénétrer dans un autre véhicule (ou une barrière) lors d'un choc frontal à haute vitesse. Lorsque l'ensemble présente un dispositif d'absorption dit de « voie basse » et que l'absorbeur intermédiaire est situé au-dessous d'un absorbeur supérieur, il est disposé sur le dispositif de liaison entre les dispositifs d'absorption dits de « voie haute » et de « voie basse », intercalé entre eux. L'absorbeur intermédiaire est disposé préférentiellement de manière adjacente à l'absorbeur supérieur pour une répartition optimale des efforts. De préférence, au moins un absorbeur intermédiaire est associé à chaque absorbeur supérieur.

Selon un deuxième aspect, l'absorbeur intermédiaire est préférentiellement de longueur inférieur ou égale à celle de l'absorbeur supérieur de façon à ce que sa face opposée à celle prenant appui sur le gousset de brancard se place en retrait par rapport à la face d'impact de la poutre supérieure. Une telle disposition permet de ne pas solliciter l'absorbeur intermédiaire lors d'un choc à faible vitesse. L'absorbeur intermédiaire est donc préférentiellement dimensionné pour ne pas être sollicité lors d'un choc restant dans la limite d'élasticité de l'absorbeur supérieur.

Selon un troisième aspect, l'absorbeur intermédiaire n'est pas disposé dans le prolongement d'un élément de structure longitudinal du véhicule tel qu'un brancard ou une prolonge de berceau, mais en appui sur un élément de structure vertical. De la sorte, un absorbeur supérieur et au moins un absorbeur intermédiaire prennent appui sur le même élément de structure vertical, à savoir un gousset de brancard.

L'invention sera bien comprise et d'autres aspects et avantages apparaîtront clairement au vu de la description qui suit, donnée à titre d'exemple, en référence aux planches de dessins annexées sur lesquelles :
- la figure 1 est une vue partielle d'un ensemble d'absorption de chocs selon l'art antérieur ;
- la figure 2 est une vue partielle d'un ensemble selon l'invention.
- les figures 3 à 4 sont des vue partielles de variantes de réalisation ensembles d'absorption de chocs selon des modes de réalisation exemplaires.

Dans la description qui suit les termes « inférieur », « supérieur », « avant » et « arrière » s'entendront par rapport à l'orientation générale du véhicule. Ainsi lorsque l'ensemble d'absorption de chocs est situé à l'avant d'un véhicule, la face avant de la poutre de pare-chocs entre en contact avec le pare-chocs lors d'un choc de sorte à ce qu'elle se déforme en s'enfonçant vers l'arrière. Dans le cas où l'ensemble d'absorption de chocs est situé à l'arrière d'un véhicule, c'est la face arrière de la poutre qui entre en contact avec le pare-chocs et la déformation générée se fait en direction de l'avant du véhicule. « Inférieur » désignera une proximité au sol plus importante que « supérieur » selon l'axe vertical.

L'invention sera décrite ici en relation avec un dispositif d'absorption de chocs pour structure avant de véhicule, mais sera adaptée sans peine par l'homme du métier à un dispositif d'absorption de chocs pour structure arrière de véhicule.

La figure 1 ayant déjà été commentée dans la partie introductive, on se réfèrera à présent à la figure 2 qui présente une première variante de l'invention dans laquelle l'ensemble d'absorption comprend un dispositif d'absorption « voie haute » et un dispositif d'absorption « voie basse ». Néanmoins, l'invention peut également être mise en oeuvre comme nous le verrons plus loin sur des véhicules ne comportant qu'un dispositif d'absorption « voie haute ».

On notera que les figures 2 à 4 ne présentent qu'un seul absorbeur supérieur sur les deux associés à la poutre supérieure. L'invention associe au moins un absorbeur intermédiaire à chacun des absorbeurs supérieurs.

La structure du véhicule comprend de manière connue des brancards 1 et un berceau avec des prolonges de berceau 13. Les extrémités des brancards 1 sont reliées verticalement aux extrémités des prolonges de berceau 13 par des éléments verticaux, par exemple un gousset de brancard 11 associé à une platine 15 absorbeur bas. L'homme du métier pourra également utiliser en lieu et place de l'ensemble gousset de brancard et platine absorbeur bas, un gousset de brancard dimensionné pour s'étendre vers le bas jusqu'à se placer en regard des extrémités des prolonges de berceau.

L'ensemble selon l'invention tel que présenté sur la figure 2 comprend un dispositif d'absorption de type « voie haute », lequel comprend de manière connue une poutre supérieure de pare-chocs 3, transversale, et des absorbeurs de chocs supérieurs 5 disposés entre ladite poutre et les extrémités avant des brancards 1. Il comprend également un dispositif d'absorption de type « voie basse », lequel comprend de manière connue une poutre inférieure de pare-chocs 7, et des absorbeurs de chocs inférieurs 9 disposés entre ladite poutre et les extrémités avant des prolonges de berceau 13. Un élément de structure vertical 11, ou gousset de brancard, est intercalé entre l'extrémité d'un brancard 1 et un absorbeur supérieur 5. Le gousset de brancard 11 est relié par son extrémité inférieure à une platine absorbeur bas 15, intercalée entre les absorbeurs inférieurs 9 et les extrémités des prolonges de berceau 13.

L'ensemble selon l'invention est remarquable en ce qu'il comprend au moins un absorbeur intermédiaire 17 destiné à être disposé sur le gousset de brancard 11, de sorte à ce que ledit gousset serve d'appui à la fois pour l'absorbeur supérieur et pour l'absorbeur intermédiaire. L'absorbeur intermédiaire 17 est préférentiellement disposé adjacent à un absorbeur supérieur 5, c'est-à-dire dans son voisinage immédiat. On aura compris que préférentiellement chaque absorbeur supérieur 5 est associé à au moins un absorbeur intermédiaire 17. Donc l'ensemble comprend préférentiellement au moins deux absorbeurs intermédiaires 17.

Cet élément d'absorption intermédiaire 17 est disposé décalé selon la direction verticale par rapport aux extrémités des éléments de structure du véhicule. C'est-à-dire qu'il n'est placé ni en prolongement des brancards 1, ni en prolongement des prolonges de berceau 13. Il est disposé sur le gousset de brancard 11 de façon à être placé soit au-dessus des absorbeurs supérieurs, soit au-dessous des absorbeurs supérieurs selon une direction verticale. De préférence, au moins élément d'absorption intermédiaire est placé entre les absorbeurs supérieur et inférieur et donc entre lesdits brancards et lesdites prolonges de berceau selon une direction verticale. La présence d'un absorbeur additionnel en position intermédiaire, intercalé entre les absorbeurs inférieurs et supérieurs permet de diminuer le comportement agressif du véhicule. Selon une variante de l'invention, au moins un élément d'absorption intermédiaire est placé au-dessus de l'absorbeur supérieur. Selon une autre variante de l'invention, des éléments d'absorption intermédiaires sont placés à la fois au-dessus et en-dessous de l'absorbeur supérieur selon la direction verticale, si bien que l'absorbeur supérieur est pris en sandwich selon la direction verticale entre deux absorbeurs intermédiaires.

Les absorbeurs intermédiaires selon l'invention présentent une longueur, mesurée selon l'axe longitudinal du véhicule, qui est inférieure ou égale à la longueur selon ce même axe du dispositif d'absorption supérieur, c'est-à-dire de l'ensemble formé par les absorbeurs et la poutre supérieure.

De préférence, les absorbeurs intermédiaires 17 s'étendent sur une longueur inférieure au dispositif d'absorption supérieur de sorte à ne pas être sollicité lors d'un choc à faible vitesse pour lequel le dispositif d'absorption supérieur se déforme dans le domaine élastique. L'homme du métier dimensionnera les absorbeurs intermédiaires sans peine à cet effet.

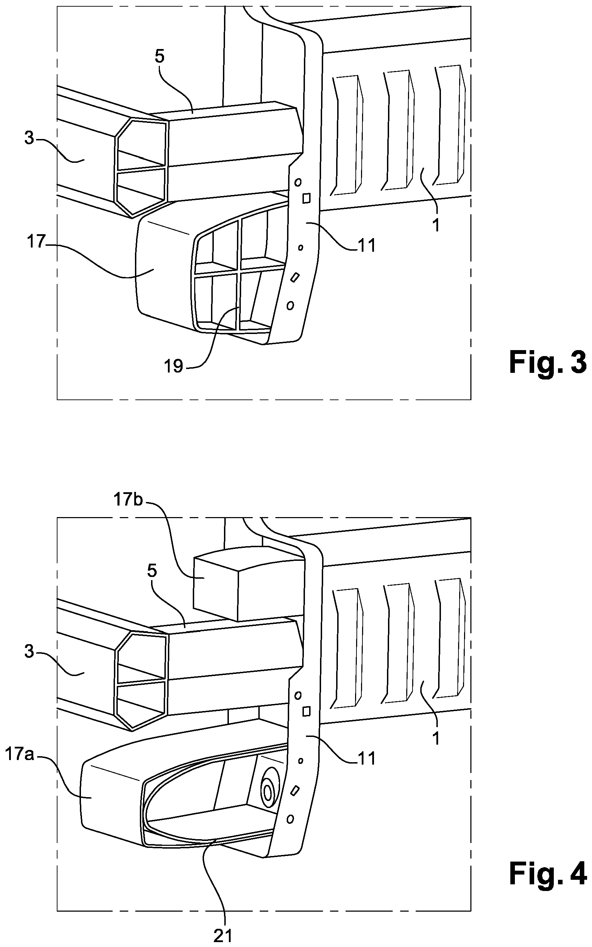

Alternativement, et comme représenté sur la figure 4, l'absorbeur intermédiaire 17a s'étend sur une longueur qui est égale à la longueur du dispositif d'absorption supérieur, ou inférieure à celle-ci tout en restant dans le domaine d'élasticité de l'absorbeur supérieur 5. Ainsi l'absorbeur intermédiaire 17a contribue à l'effort d'absorption de choc dans le domaine élastique de l'absorbeur supérieur 5.

Selon l'exemple de réalisation de l'invention illustré sur la figure 2, l'élément d'absorption intermédiaire 17 se présente sous forme d'une boite en tôle pliée ou emboutie, par exemple en acier ou en aluminium. Néanmoins l'absorbeur intermédiaire peut se présenter sous d'autres formes tant qu'il présente une capacité d'absorption de chocs.

Ainsi, et comme illustré sur la figure 3, l'élément d'absorption intermédiaire 17 peut être réalisé en matériau composite thermoplastique ou thermodurcissable. Une mise en oeuvre préférée de l'invention privilégiera l'utilisation de matrices thermoplastiques qui présentent des limites au délaminage et à la rupture plus élevées que les résines thermodurcissables.

La fabrication de l'absorbeur intermédiaire 17 en matériau thermoplastique peut se faire par exemple par thermo estampage comprenant une étape de moulage par compression de pré-imprégnés constitués par la combinaison de renforts et d'une matrice polymère thermoplastique. Il peut également être réalisé selon un procédé de moulage par compression et par transfert. De plus, il est possible de combiner le moulage de l'absorbeur avec au moins une étape de sur-injection de matrice thermoplastique chargée de fibres coupées de la même famille de polymère pour réaliser des décors de renforcement comme par exemple des nervures 19. Ces différents procédés sont bien connus de l'homme du métier.

Quel que soit le procédé de fabrication choisi, l'homme du métier aura avantage à sélectionner la matrice polymère thermoplastique parmi un ou plusieurs matériaux choisis entre le polypropylène (PP), le polyphtalamide (PPA), le polyetherethercétone (PEEK), polysulfure de phénylène (PPS), le polyamide-imide (PAI), le polyetherimide (PEI), le polyacrylamide (PAA), ou le polyamide (PA) tel que par exemple du polyamide 6 (PA 6 ou polycaprolactame) ou du polyamide 6.6 (PA 6.6 ou polyhexaméthylène adipamide).

Les renforts peuvent être tout ou partie réalisés à base de non tissé (mat) et/ou de fibres continues tissées ou cousues. Des renforcements à base de fibres continues sous forme de bandes de tissus ou de rubans unidirectionnels peuvent être placés dans le moule pour renforcer la pièce dans les zones de concentration d'efforts.

Les fibres de renforcement pour les tissés et/ou les non tissés peuvent être organiques ou non organiques. Ainsi les renforcements comprennent des fibres ou un mélange de fibres sélectionnées parmi les fibres de verre, de carbone, de céramique, de graphite, naturelles telles que des fibres de lin, de chanvre ou de bambou, de polymères organiques tels que des fibres de polyester. De préférence les fibres des éléments de renforcement sont des fibres de verre et/ou de carbone.

La fabrication de l'absorbeur intermédiaire en matériau thermodurcissable peut se faire selon les techniques connues de RTM (Resin Transfer Moulding) ou de SMC (Sheet Moulding Compound) par exemple.

Les résines utilisées peuvent être sélectionnées parmi les résines polyépoxydes, les résines polyester insaturés, les résines vinylester, les copolymères tels que les résines polyester-vinylester.

Selon un mode de réalisation préféré, l'absorbeur intermédiaire 17 comprend des éléments de renforcement locaux. Par exemple, il comprend des rubans unidirectionnels ou des éléments tubulaires obtenus par pultrusion, pull-winding ou tricotage (braiding). Les éléments de renfort comprennent des fibres telles que des fibres de verre ou des fibres de carbone et une matrice polymère pouvant être une résine thermodurcissable telle qu'une résine polyester insaturée, une résine polyuréthane, une résine vinylester ou une résine polyépoxyde. Les éléments de renfort peuvent également comprendre une matrice thermoplastique comme le polytéréphtalate de butylène (PBT) ou le polypropylène (PP). Les éléments de renfort peuvent être introduits dans le moule en plus des tissés puis être écrasés à plat pour assurer un renforcement local.

L'homme du métier choisira sans peine le matériau, les renforts éventuels et l'épaisseur des parois et cloisons internes de l'absorbeur intermédiaire 17 en fonction de la capacité d'absorption recherchée.

Un des avantages de l'invention est que la conception de l'absorbeur intermédiaire 17 en matériau composite permet de le fonctionnaliser au moment de sa fabrication par ajout d'inserts métalliques avant moulage destinés à la fixation dudit absorbeur 17 sur le gousset de brancard 11.

Néanmoins, de préférence, la fixation de l'absorbeur intermédiaire 17 sur le gousset de brancard 11 se fera sans l'ajout d'inserts métalliques, par vissage, soudage ou collage.

On notera que sur l'exemple de réalisation illustré à la figure 3, l'ensemble d'absorption ne comprend pas de dispositif voie basse, et donc la structure de véhicule ne comprend pas de prolonges de berceau. Le dispositif intermédiaire est fixé, comme dans l'exemple de réalisation précédent sur un élément de structure vertical, en l'occurrence un gousset de brancard 11. L'absorbeur intermédiaire 17 ne se place préférentiellement pas en prolongement d'un élément longitudinal de structure du véhicule, à la différence de l'absorbeur supérieur 5.

Sur l'exemple de réalisation de la figure 4, l'ensemble d'absorption ne comprend pas de dispositif inférieur mais un dispositif d'absorption supérieur et deux absorbeurs intermédiaires 17a et 17b disposés respectivement en-dessous et au-dessus de l'absorbeur supérieur selon la direction verticale.

Dans l'exemple illustré l'absorbeur intermédiaire 17b disposé au-dessus de l'absorbeur supérieur a été réalisé en mousse de polyuréthane tandis que l'absorbeur intermédiaire 17a situé en-dessous de l'absorbeur supérieur a été réalisé en polypropylène. La mousse de polyuréthane utilisée dans le cadre de l'invention présente préférentiellement une densité d'environ 80 g/l. Afin de présenter une rigidité suffisante pour sa mise en oeuvre en tant qu'absorbeur de choc, l'absorbeur intermédiaire 17a en polypropylène comprend une paroi d'environ 3.5 mm d'épaisseur et une arche de rigidification interne, en polypropylène également, légèrement moins épaisse, par exemple de 2.5 mm d'épaisseur. L'arche de rigidification 21 peut s'avancer jusqu'à la paroi avant de l'absorbeur, comme illustré ou présenter un jeu avec cette paroi. L'arche de rigidification interne peut également être remplacée par un réseau de cloisons internes en vagues selon un exemple de réalisation de l'invention non représenté.

On aura noté que dans l'exemple de réalisation illustré à la figure 4, les absorbeurs intermédiaires disposés au-dessous 17a et au-dessus 17b de l'absorbeur supérieur 5 ne présentent pas la même longueur. En effet, lorsque l'ensemble d'absorption de chocs comprend au moins deux absorbeurs intermédiaires (17a, 17b) ceux-ci peuvent présenter des longueurs similaires ou différentes. De préférence, l'absorbeur intermédiaire disposé au-dessus de l'absorbeur supérieur présente une taille inférieure à celle de l'absorbeur inférieur disposé au-dessous de l'absorbeur supérieur.

L'un des avantages de l'invention est que la masse d'un absorbeur intermédiaire est relativement faible (moins de 500 grammes). L'invention est donc remarquable en ce qu'elle permet de résoudre le problème d'agressivité du véhicule sans pour autant augmenter significativement son poids. Un autre avantage est qu'elle est adaptable à tout type de véhicule et ne nécessite pas de modification des installations industrielles existantes.

La fixation d'un absorbeur intermédiaire sur le gousset de brancard peut se faire par différents moyens à disposition de l'homme du métier comme par exemple par rivetage (avec l'utilisation de rivets aveugles), visage (avec l'utilisation de vis auto-perceuses) ou collage. Dans le cas d'un collage, la colle peut être par exemple issue d'une base époxy polymérisant à température ambiante.

Les essais ont montrés que l'emploi d'un ensemble selon l'invention génère une déformation plus homogène de la barrière, en particulier lorsqu'un absorbeur intermédiaire est disposé entre les voies d'effort haute et basse, c'est-à-dire lorsqu'un absorbeur intermédiaire est disposé entre un absorbeur supérieur et un absorbeur inférieur. En effet, il en résulte une répartition des efforts sur toute la hauteur de la barrière et une limitation voire une suppression des déchirures observées pour un ensemble similaire ne comprenant pas d'absorbeur intermédiaire. La limitation du comportement agressif du véhicule est également observée pour des véhicules ne comprenant pas de voie d'effort basse.

## Revendications

1. Ensemble d'absorption de chocs pour véhicule, ledit véhicule comprenant des brancards (1) longitudinaux, ledit ensemble comprenant des goussets de brancards (11) agencés pour être disposés à l'extrémité desdits brancards (1), des absorbeurs supérieurs (5) disposés sur lesdits goussets de brancard (11) dans le prolongement desdits brancards (1) et une poutre de pare-chocs supérieure (3) reliant transversalement les absorbeurs supérieurs (5), l'ensemble comprenant en outre des absorbeurs inférieurs (9), ledit ensemble étant **caractérisé en ce qu'**au moins un absorbeur intermédiaire (17) est disposé intercalé selon la direction verticale entre un absorbeur supérieur (5) et un absorbeur inférieur (9), ledit au moins un absorbeur intermédiaire (17) étant destiné à être disposé sur un gousset de brancard (11).

2. Ensemble selon la revendication 1 caractérisé en qu'au moins un absorbeur intermédiaire (17) est disposé adjacent à un absorbeur supérieur (5).

3. Ensemble selon la revendication 1 ou 2 caractérisé en qu'au moins un absorbeur intermédiaire (17) est disposé adjacent à chacun des absorbeurs supérieurs (5).

4. Ensemble selon l'une des revendications 1 à 3 **caractérisé en ce qu'**au moins un élément d'absorption intermédiaire (17) est constitué:
- d'une boite en tôle pliée ou emboutie, ou
- d'un bloc de mousse polyuréthane, ou
- d'un matériau plastique thermoplastique ou thermodurcissable de préférence sélectionnée dans le groupe comprenant les résines polypropylène, polyamide, polyphtalamide, polyetherethercétone, polysulfure de phénylène, polyamide-imide, polyetherimide, polyacrylamide, polyépoxyde, polyester insaturés, vinylester ou polyester-vinylester.

5. Ensemble selon l'une des revendications 1 à 4 **caractérisé en ce qu'**au moins un absorbeur intermédiaire (17) est dimensionné pour s'étendre longitudinalement sur une longueur inférieure ou égale à celle présentée par l'association d'un d'absorbeur supérieur (5) et de la poutre supérieure (3), de préférence au moins un absorbeur intermédiaire (17) présente une longueur inférieure ou égale à celle présentée par un absorbeur supérieur (5).

6. Véhicule **caractérisé en ce qu'**il comprend un ensemble selon l'une des revendications 1 à 5.

## Patentansprüche

1. Stoßfängeranordnung für Fahrzeug, wobei das Fahrzeug Längsträger (1) umfasst, wobei die Anordnung Längsträgereckstücke (11) umfasst, die eingerichtet sind, um an dem Ende der Längsträger (1) angeordnet zu sein, obere Stoßfänger (5), die auf den Längsträgereckstücken (11) in der Verlängerung der Längsträger (1) angeordnet sind, und einen oberen Stoßfängerbalken (3), der die oberen Stoßfänger (5) quer verbindet, wobei die Anordnung außerdem untere Stoßfänger (9) umfasst, Anordnung **dadurch gekennzeichnet, dass** mindestens ein Zwischenstoßfänger (17) entlang der vertikalen Richtung zwischen einem oberen Stoßfänger (5) und einem unteren Stoßfänger (9) zwischengefügt ist, wobei der mindestens eine Zwischenstoßfänger (17) dazu bestimmt ist, auf einem Längsträgereckstück (11) angeordnet zu sein.

2. Anordnung nach Anspruch 1, **dadurch gekennzeichnet, dass** mindestens ein Zwischenstoßfänger (17) benachbart zu einem oberen Stoßfänger (5) angeordnet ist.

3. Anordnung nach Anspruch 1 oder 2, **dadurch gekennzeichnet, dass** mindestens ein Zwischenstoßfänger (17) benachbart zu jedem der oberen Stoßfänger (5) angeordnet ist.

4. Anordnung nach einem der Ansprüche 1 bis 3, **dadurch gekennzeichnet, dass** mindestens ein Zwischenstoßfängerelement (17) aus Folgendem besteht:
- ein Gehäuse aus gefaltetem oder gestanztem Blech, oder
- ein Polyurethanschaumstoffblock,
- ein Thermoplast- oder wärmehärtbarer Kunststoff, der bevorzugt aus der Gruppe ausgewählt ist, die Polypropylen-, Polyamid-, Polyphtalamid-, Polyetheretherketon-, Phenylenpolysulfid-, Polyamid-Imid-, Polyetherimid-, Polyacrylamid-, Polyepoxid-Harze, ungesättigte Polyester, Vinylester oder Polyester-Vinylester umfasst.

5. Anordnung nach einem der Ansprüche 1 bis 4, **dadurch gekennzeichnet, dass** mindestens ein Zwischenstoßfänger (17) bemessen ist, um sich längs auf einer Länge zu erstrecken, die kleiner oder gleich der ist, die die Assoziation eines oberen Stoßfängers (5) und des oberen Balkens (3) aufweist, bevorzugt mindestens ein Zwischenstoßfänger (17) eine Länge kleiner oder gleich der aufweist, die ein oberer Stoßfänger (5) aufweist.

6. Fahrzeug, **dadurch gekennzeichnet, dass** es eine Anordnung nach einem der Ansprüche 1 bis 5 umfasst.

## Claims

1. A shock-absorbing assembly for a vehicle, said vehicle including longitudinal side rails (1), said assembly including side rail gussets (11) arranged to be disposed at the end of said side rails (1), upper absorbers (5) disposed on said side rail gussets (11) in the extension of said side rails (1) and an upper bumper beam (3) transversely connecting the upper absorbers (5), the assembly further including lower absorbers (9), said assembly being **characterized in that** at least one intermediate absorber (17) is disposed intercalated along the vertical direction between an upper absorber (5) and a lower absorber (9), said at least one intermediate absorber (17) being intended to be disposed on a side rail gusset (11) .

2. The assembly according to Claim 1, **characterized in that** at least one intermediate absorber (17) is disposed adjacent an upper absorber (5).

3. The assembly according to Claim 1 or 2, **characterized in that** at least one intermediate absorber (17) is disposed adjacent to each of the upper absorbers (5).

4. The assembly according to one of Claims 1 to 3, **characterized in that** at least one intermediate absorption element (17) is constituted:
- by a box of folded or stamped metal sheet, or
- by a block of polyurethane foam, or
- by a thermoplastic or thermosetting plastic material, preferably selected from the group including polypropylene, polyamide, polyphtalamide, polyetheretherketone, polyphenylene sulphide, polyamide imide, polyetherimide, polyacrylamide, polyepoxide, unsaturated polyester, vinyl ester or polyester-vinyl ester resins.

5. The assembly according to one of Claims 1 to 4, **characterized in that** at least one intermediate absorber (17) is dimensioned to extend longitudinally over a length less than or equal to that presented by the association of an upper absorber (5) and of the upper beam (3), preferably at least one intermediate absorber (17) presents a length less than or equal to that presented by an upper absorber (5).

6. A vehicle, **characterized in that** it includes an assembly according to one of Claims 1 to 5.
